# FASCICULE DE BREVET EUROPEEN

(11) **EP 0 718 730 B1**
(45) Date de publication et mention de la délivrance du brevet: **18.07.2001**
(21) Numéro de dépôt: 95440089.1
(22) Date de dépôt: 21.12.1995
(51) Int. Cl.: G05B 19/042

(54) **Dispositif pour la commande d'ouverture et de fermeture de moyens d'occultation motorisés, tout particulièrement de volets roulants**
Steuergerät zum Öffnen und Schliessen motorisierter Verdunklungsmittel, insbesondere Rolläden
Controller to open and close motorized occulation means, especially roller blinds

(30) Priorité: 23.12.1994 FR 9415734
(43) Date de publication de la demande: 26.06.1996
(73) Titulaire: BUBENDORFF Société Anonyme, 68300 Saint-Louis (FR)
(72) Inventeur: Bubendorff, Eric, 68510 Uffheim (FR)
(74) Mandataire: Rhein, Alain

(56) Documents cités:
- EP-A- 0 320 390
- WO-A-93/14550
- DE-A- 3 806 733
- DE-A- 4 106 033
- DE-A- 4 221 640
- US-A- 5 059 871
- US-A- 5 189 412

## Description

L'invention concerne, un dispositif pour la commande d'ouverture et de fermeture de moyens d'occultation motorisés plus particulièrement de volets roulants, composés de stations définissant un ou plusieurs groupes, chaque station correspondant à un moyen d'occultation étant équipé d'un boîtier électronique comportant une unité de traitement logique programmable à laquelle est associée une mémoire ainsi que des moyens de commande pour le fonctionnement dudit moyen d'occultation correspondant à ladite station.

La présente invention concerne le domaine des moyens d'occultation motorisés et, tout particulièrement, celui des fermetures du type volet roulant.

En fait, la commande d'éléments d'occultation motorisés, tels que des volets roulants d'une habitation, s'effectue, actuellement, d'une part, par l'intermédiaire d'interrupteurs associés à un chacun de ces volets roulants et permettant une commande individuelle de ces derniers ou encore par une commande centrale placée à un endroit précis dans l'habitation et autorisant la commande simultanée de tous les volets roulants ou, seulement, d'un groupe d'entre eux. Dans ce dernier cas de figure, l'on dispose, préférentiellement, d'autant de commandes centrales, placées, chacune, de manière définitive à un endroit précis de l'habitation, que de groupes de volets roulants pour lesquels il convient de disposer d'une commande commune.

Dans tous les cas, l'on s'aperçoit que ce ou ces interrupteurs constituant une commande centrale, soit de l'ensemble des volets roulant, soit seulement, d'un groupe de volets roulants, se situent à un endroit dans l'habitation qui est figé une fois pour toutes lors de la construction. En effet, le déplacement d'une telle commande centrale nécessite un recâblage total de l'installation ce qui est particulièrement contraignant.

Pourtant, il paraît évident qu'il serait utile de pouvoir adapter l'implantation de la commande centrale des volets roulants ou d'un groupe de volets roulants d'un local, au bon vouloir de l'habitant qui, souvent, ne discerne, l'endroit idéal pour cette commande centrale qu'après une certaine expérience et, donc, un certain temps d'usage des locaux. En outre, il convient d'observer qu'il peut y avoir changement au niveau des habitants qui, en raison de leurs habitudes ou, même de l'activité menée dans cette habitation souhaiteraient pouvoir adapter, en fonction, la disposition de la commande groupée des volets roulants.

La présente invention a pour but, précisément, de remédier à cela tout en évitant, bien entendu, de multiplier le nombre de commandes de ces volets roulants.

En fait, selon l'invention, il s'agit de proposer un dispositif de commande qui permette de configurer les moyens de commande, par exemple, les interrupteurs associés à chaque volet roulant, en une commande centrale d'un groupe ou d'un sous-groupe de volets roulants. En quelque sorte, le dispositif de commande a pour but d'offrir la possibilité de se servir des mêmes interrupteurs qui, habituellement, permettent une commande individuelle d'un volet roulant, en tant que commande centrale d'un groupe ou d'un sous-groupe de volets roulants dans une habitation, sachant que l'occupant peut, à tout moment, décider lesquels des moyens de commandes associés à chaque volet roulant, vont constituer cette commande centrale d'un groupe ou d'un sous-groupe de volets roulants.

On connaît, par ailleurs, par le document US-A-5.059.871 un système programmable pour le contrôle d'un réseau local de moyens d'éclairage. Plus particulièrement, ce système de contrôle comporte une pluralité de modules de contrôle de moyens d'éclairage comportant, chacun, des moyens pour gérer l'intensité lumineuse d'une pluralité de lumières raccordées à un même canal. Ce système comporte, en outre, une unité de traitement centrale programmable à même de transmettre les signaux émis ainsi qu'un code d'identification.

Les différents modules sont par ailleurs interconnectés au travers d'un réseau local autorisant le transfert des codes et signaux de commande. Chaque module de contrôle est programmable de telle manière qu'un signal de commande généré par certains modules de contrôle sélectionnés soit exécuté par d'autres modules de contrôle.

De plus, chaque module comporte un tableau de commande muni d'une pluralité de boutons de commande permettant la sélection d'un ordre de commande déterminé. Sur ce tableau de commande l'on peut retrouver des indicateurs lumineux sous forme de colonnes de diode led permettant de donner à l'usager une indication quant à l'intensité lumineuse sélectionnée pour des organes lumineux raccordés à tel ou tel canal.

Ce tableau de commande peut être pourvu d'un bouton de commande spécifique permettant de sélectionner le mode de programmation du module. Par ailleurs, en mode programmation, les indicateurs lumineux cités précédemment sont programmés de manière à donner une indication visuelle quant au programme qui est en cours de sélection. Ainsi, ces indicateurs lumineux permettent à l'usager de vérifier lequel des programmes il a réellement sélectionné.

En fait, l'on remarquera qu'au travers de ce système qui est finalement destiné à la gestion d'un réseau d'éclairage, il n'est pas possible d'obtenir, au niveau de chaque module, transformé pour l'occasion en tant que station maître, un retour de la bonne exécution de l'ordre transmis aux autres modules lors d'une commande groupée par exemple. Ainsi, les voyants disposés sur un tableau de commande ne permettent de donner à l'usager qu'une information relative à l'ordre que l'on souhaite transmettre et non à la bonne exécution de cet ordre. Si l'on peut, effectivement, s'abstenir de telles informations dans le domaine de la gestion d'un réseau d'éclairage, cela n'est pas envisageable dans le domaine plus particulièrement visé par la présente invention, à savoir les moyens d'occultation tels que des volet roulants. En effet, la sécurité de locaux en dépend et il est donc impératif de pouvoir s'assurer que tous les moyens d'occultation sont convenablement fermés avant de quitter les locaux par exemple.

Ainsi, la présente invention a pour but de remédier aux inconvénients précités.

L'invention telle qu'elle est caractérisée dans les revendications résout le problème et consiste en un dispositif pour la commande d'ouverture et de fermeture de moyens d'occultation motorisés, plus particulièrement de volets roulants, composés de stations définissant un ou plusieurs groupes, chaque station, correspondant à un moyen d'occultation, étant équipé d'un boîtier électronique comportant une unité de traitement logique programmable à laquelle est associée une mémoire, ainsi que des moyens de commande pour le fonctionnement dudit moyen d'occultation correspondant à ladite station, caractérisé par le fait que :
- l'unité de traitement logique programmable est connectée, d'une part, au moteur dudit moyen d'occultation par une interface de puissance et, d'autre part, aux autres stations du groupe par une interface domotique ;
- les moyens de commande constituent des moyens de programmation de l'unité de traitement logique programmable par l'intermédiaire de laquelle une station peut être configurée en station maître ou en station esclave autorisant ou non la commande, par l'intermédiaire desdits moyens de commande de ladite station, d'une ou plusieurs autres stations d'un groupe ou d'un sous-groupe ;
- chaque station comporte des moyens de détection à même d'informer l'unité de traitement logique sur la position de l'élément d'occultation, tel que le tablier d'un volet roulant, tout particulièrement ces moyens de détection étant aptes à informer l'unité de traitement logique si un moyen d'occultation est ou non fermé ;
- chaque station comporte des moyens de signalisation visuels et/ou sonores à même d'émettre une information quant à la bonne exécution ou non d'un ordre de commande d'ouverture et/ou de fermeture d'un groupe ou d'un sous-groupe, de moyens d'occultation et/ou sur la bonne compréhension et assimilation d'un ordre de programmation saisi par les moyens de commande.

L'invention est exposée plus en détail dans la description qui va suivre accompagnée d'un dessin se rapportant à un exemple de réalisation.
- la figure 1 est une vue schématisée du dispositif de commande selon l'invention associé à un groupe de volets roulants correspondant à des stations ;
- la figure 2 est un schéma synoptique du boîtier électronique correspondant à une station.

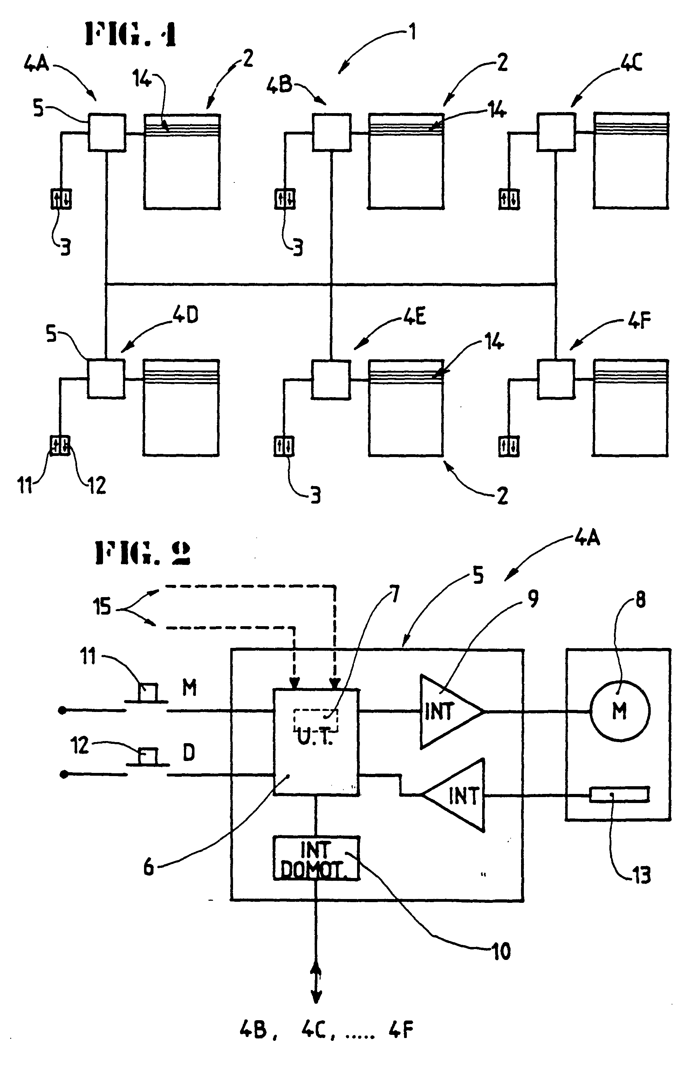

Ainsi, la présente invention est relative à un dispositif 1 pour la commande d'ouverture et de fermeture de moyens d'occultation 2, en l'occurrence de volets roulants motorisés, tels que représentés dans la figure 1 de manière schématisée.

Tout particulièrement, une habitation ou un groupe d'habitation peut être équipé de volets roulants motorisés que l'on peut, bien sûr, commander individuellement, grâce à des moyens de commande 3 propres à chacun de ces volets roulants 2, lequel peut, par ailleurs, appartenir à un groupe ou à un sous-groupe de volets roulants dont il doit être possible d'assurer la commande simultanément.

Des moyens de commande 3 correspondant à un volet roulant 2 permettent de commander, non seulement ce dernier, mais également les autres volets roulants 2 faisant partie d'un même groupe ou d'un même sous-groupe. En outre, il est dans les possibilités de l'utilisateur de choisir le volet roulant 2 dont les moyens de commande 3 sont à même de constituer une commande centrale à même de gérer le fonctionnement d'un tel groupe ou sous-groupe de volets roulants 2.

Ainsi, le dispositif de commande 1 est composé de stations 4A, 4B, 4C, 4D, 4E, 4F définissant un groupe. Bien entendu, le nombre de ces stations correspondant à un groupe est totalement variable. En outre, étant donné qu'à chaque station correspond un volet roulant 2, un groupe peut être composé par l'ensemble des volets roulants d'une habitation, voire de plusieurs habitations ou, simplement, d'un local.

Chaque station est équipée d'un boîtier électronique 5 représenté plus en détail dans la figure 2. Ainsi, ce boîtier électronique 5 est muni d'une unité de traitement logique programmable 6 à laquelle est associée une mémoire 7 et qui est connectée, d'une part, au moteur 8 du volet roulant 2 correspondant à la station concernée, ceci par une interface de puissance 9. D'autre part, cette unité de traitement logique 6 est reliée aux autres stations du groupe par une interface domotique 10.

Tel que déjà précisé plus haut, à chaque volet roulant 2 et, donc, à chaque station 4A, 4B... 4F sont associés des moyens de commande 3 par l'intermédiaire desquels il est possible, bien entendu, de commander le fonctionnement et par conséquent la montée et la descente du volet roulant 2 concerné. Cependant et selon l'invention, ces moyens de commande 3 constituent, en outre, des moyens pour la programmation de l'unité de traitement logique programmable 6 par l'intermédiaire de laquelle une station peut être configurée en station maître ou en station esclave, ceci par rapport à un groupe ou à un sous-groupe dont fait partie ladite station.

Plus précisément, au travers de ces moyens de commande 3 il est possible d'informer l'unité de traitement logique 6 d'une station 4A, 4B ... 4F si celle-ci est susceptible ou non d'être commandée par les moyens de commande 3 d'une autre station 4A, 4B ... 4F correspondant à un même groupe ou sous-groupe. Simultanément, cette unité de traitement logique 6, en liaison par l'interface domotique 10, avec les autres stations, informe les unités de traitement logique 6 de ces dernières de son état maître ou esclave.

A noter que c'est également par l'intermédiaire de ces moyens de commande 3 d'une station donnée 4A, 4B .... 4F que celle-ci, plus particulièrement son unité de traitement logique 6, est informée de l'identité du groupe et/ou du sous-groupe auquel elle est associée. Il convient, en effet, d'observer qu'une station, tout en faisant partie d'un groupe de stations peut, par ailleurs, faire partie d'un sous-groupe dont elle peut être le maître ou l'esclave.

En conséquence, en fonction des données introduites en mémoire 7, une unité de traitement logique 6 correspondant à une station 4A, 4B ... 4F est en mesure d'identifier la nature de la programmation dont il est l'objet par l'intermédiaire des moyens de commande 3.

A ce propos, lesdits moyens de commande 3 sont constitués par des interrupteurs monostables 11, 12 du type standard, tels qu'utilisés, le plus fréquemment, pour la commande de montée et de descente d'un volet roulant motorisé. Ainsi, l'on dispose, préférentiellement de deux interrupteurs qui, lorsqu'ils sont utilisés en tant que commande directe sont destinés, l'un, pour commander la montée et, l'autre, la descente du tablier du volet roulant auquel ils sont associés. Par ailleurs, ces interrupteurs 11, 12, transmettent, préférentiellement, une information du type séquentielle à l'unité de traitement logique 6 à même d'interpréter les séquences en fonction des données en mémoire 7. Notamment, étant en présence de deux interrupteurs seulement, les séquences sont identifiées par rapport
- à l'origine de l'impulsion (interrupteur montée 11 ou interrupteur descente 12) ;
- l'ordre des impulsions montée-descente ; descente montée ...;
- le nombre des impulsions montée et/ou descente ;
- la durée des impulsions.

A noter, à ce propos, en ce qui concerne la transmission de l'information séquentielle, entre les interrupteurs 11, 12 et l'unité de traitement logique 6, elle peut être envisagée soit par bus ou par courant porteur, soit par ondes ultrasons, infrarouges, ou radio. Bien sûr, l'on peut encore choisir une combinaison de ces différentes solutions. De même, la transmission des informations entre stations peut adopter l'une ou l'autre des solutions précédemment mentionnées. Toutefois, il convient d'observer qu'en cas de réception et de transmission d'informations sous forme codée et cryptée, une station 4A, 4B ... 4F est munie, en outre, d'une unité de cryptage-codage, ainsi que d'une unité de décryptage-décodage. Quant aux moyens de commande 3, ils sont eux aussi, équipés, dans ces conditions, d'une unité de cryptage-codage.

Tel que cela apparaît clairement au travers de la description qui précède, l'on peut, après une programmation appropriée, commander la descente du volet roulant correspondant à plusieurs stations par l'intermédiaire des moyens de commande d'une station donnée configurée en tant que maître. Cependant, il est souhaitable, dans ces conditions, que l'on puisse s'assurer de la bonne exécution de l'ordre effectivement saisi.

Ceci est tout particulièrement important lors de la commande de fermeture des volets roulants. En effet, avant de quitter l'habitation, par exemple, il est importer de s'assurer que celle-ci est convenablement fermée. Dans ce but, chaque station comporte des moyens de détection 13 à même d'informer l'unité de traitement logique 6 sur la position du tablier du volet roulant 2, tout particulièrement, ces moyens de détection 13 sont aptes à informer l'unité de traitement logique 6 si le volet roulant 2 est ou non fermé. Etant donné que toutes les stations d'un même groupe ou sous-groupe sont reliées les unes aux autres par l'interface domotique 10, l'unité de traitement logique 6 de chaque station correspondant à un groupe et/ou un sous-groupe est en mesure d'être informée par l'intermédiaire de l'unité de traitement logique 6 des autres stations du groupe et/ou sous-groupe si leur volet roulant est ou non fermé. Ainsi, cette information peut être transmise à l'usager par des moyens de signalisation visuels et/ou sonores appropriés 14 à chaque station 4A, 4B ... 4F. En réalité, seuls peuvent être activés les moyens de signalisation visuels et/ou sonores 14 correspondant à une station maître d'un groupe ou d'un sous-groupe et au niveau de laquelle l'usager a saisi l'ordre de la fermeture des volets roulants correspondant à son groupe ou à son sous-groupe, ceci en vue d'informer cet usager de la bonne exécution ou non de cet ordre. Ainsi, ces moyens de signalisation visuels et/ou sonores 14 peuvent se présenter sous forme d'un ou plusieurs voyants lumineux ou encore d'un vibreur sonore associé à chaque station 4A, 4B ... 4F. Toutefois, ces moyens de signalisation visuels et/ou sonores de type traditionnel présentent un certain nombre d'inconvénients. Tout particulièrement, des moyens de visualisation du type lumineux nécessitent un certain nombre de câblage supplémentaire pour leur alimentation sans compter qu'ils peuvent être cachés par la présence, éventuelle, de stores ou autres. En outre, en cas d'implantation du volet roulant à l'extérieur de l'habitation, ces moyens de signalisation lumineux ne peuvent prendre position, simplement, sur le caisson du volet roulant, mais nécessitent une opération de pose supplémentaire à l'intérieur de l'habitation. On rencontre, quasiment, les mêmes inconvénients s'agissant de moyens de signalisation sonores qui, en outre, peuvent représenter une gêne à la longue.

Aussi, selon l'invention, il est prévu de se servir du tablier du volet roulant en tant que moyens de signalisation visuels 14. Plus précisément, selon la position occupée de ce tablier 2, celui-ci informe l'usager sur la bonne exécution ou non d'un ordre suivi au niveau de moyens de commande 3. Ainsi, en cas d'ordre du type général commandé depuis une station maître, tout particulièrement pour la fermeture d'un groupe ou d'un sous-groupe de volets roulants, le tablier servant de moyen de signalisation visuel correspond, préférentiellement, à celui de cette station maître ou est saisi l'ordre général.

Ainsi, selon un premier mode de réalisation, lors d'une commande groupée de descente de volet roulants, ledit volet roulant correspondant à la station maître commandée ne se ferme qu'après avoir reçu de la part de toutes les autres unités de traitement logique 6 correspondant aux stations du groupe ou du sous-groupe commandé, l'information selon laquelle tous les volets sont fermés. Par conséquent, si ce volet roulant de la station maître ne se referme pas, l'usager est informé d'un disfonctionnement au niveau du groupe ou du sous-groupe commandé.

Un tel tablier d'un volet roulant peut encore informer l'usager de la bonne compréhension de l'ordre saisi.

Ainsi, selon un mode de réalisation préférentiel, lors d'une commande groupée, ce tablier du volet roulant correspondant à la station maître entame sa descente avant de l'interrompre pour ne poursuivre son mouvement qu'une fois recueillie, au niveau de l'unité de traitement logique 6, l'information selon laquelle tous les autres volets du groupe ou du sous-groupe sont fermés. Ainsi, par son mouvement partiel, ce tablier du volet roulant correspondant à la station maître informe l'usager, tout d'abord, que l'ordre a bien été saisi puis qu'il a bien été exécuté. Ce mouvement en deux temps de ce volet roulant de la station maître informe, également, l'usager qu'il y a bien eu commande groupée et non une commande indépendante, celle-ci aurait conduit à une fermeture, sans interruption, de ce volet roulant 2.

Bien évidemment, de tels moyens de signalisation visuels 14 formés par le tablier d'un volet roulant peuvent également informer l'usager de la bonne exécution d'une commande groupée d'ouverture de volets roulants. Toutefois, tel que déjà précisé plus haut, s'il est important de s'assurer que l'ensemble des volets roulants est fermé, avant un départ par exemple, le cas inverse n'est pas une obligation.

Finalement, ce tablier du volet roulant peut intervenir en tant que moyens de signalisation visuels 14 par l'intermédiaire desquels il est possible de s'assurer qu'un ordre de programmation de l'unité de traitement logique 6 a bien été saisi et compris. Par exemple, ledit tablier peut exécuter un mouvement du type légère descente puis de remontée, pour montrer à l'usager qu'au travers de la manipulation qu'il vient d'exécuter il est bien entré en phase de programmation de l'unité de traitement logique 6. Ou encore, après programmation consistant à configurer une station en maître ou en esclave ou à rattacher cette station à tel ou tel groupe ou sous-groupe, le tablier peut à nouveau effectuer un mouvement susceptible d'être interprété par l'usager. A noter, à ce propos, que l'on peut même adapter les caractéristiques du mouvement effectué par le volet roulant en fonction de la programmation effectuée.

La suite de la description fait état d'un exemple d'un procédé de programmation préférentielle de l'unité de traitement logique 6 d'une station correspondant au dispositif de commande 1.

Ainsi, ce procédé se distingue, tout d'abord, par une procédure d'entrée dans la programmation de cette unité de traitement logique 6 consistant :
- à appuyer, simultanément, sur les deux interrupteurs monostables 11, 12;
- à maintenir cette pression pendant une durée déterminée, par exemple, une ou plusieurs secondes ;
- à relâcher puis à appuyer, à nouveau sur l'interrupteur 11 de commande de montée ;
- à relâcher puis à appuyer, à nouveau, sur l'interrupteur 12 de descente ;
- finalement à relâcher, simultanément, les deux interrupteurs monostables 11, 12.

L'ordre de programmation est acquitté par les moyens de signalisation visuels et/ou sonores 14, préférentiellement, constitués par le tablier du volet roulant correspondant à la station en cours de programmation, ce tablier effectuant, par exemple, une brève descente suivie d'une montée.

La programmation se poursuit par l'attribution de la station concernée à un groupe ou un sous-groupe et par la configuration de cette station en tant que maître ou esclave du groupe ou du sous-groupe.

Selon un mode de réalisation préférentiel, l'identification de l'appartenance d'une station à un groupe et/ou à un sous-groupe ou de la configuration de cette station en tant que maître ou esclave, s'effectue par l'intermédiaire de chiffres correspondant à un nombre d'impulsions exercées sur un interrupteur monostable, par exemple de montée 11, ce chiffre et, donc, le nombre d'impulsions étant validés par l'autre interrupteur monostable de descente 12.

A titre d'exemple, le chiffre à saisir est initialisé à zéro, tandis que :
- le chiffre 1 : permet une configuration de la station de telle sorte que seule une commande individuelle de celle-ci soit possible. Ladite station est son propre maître et n'est donc rattachée à aucun groupe ;
- le chiffre 2 : configure la station en tant qu'esclave dans un sous-groupe, par exemple A;
- le chiffre 3 : configure la station en tant qu'esclave dans un autre sous-groupe par exemple B ;
- le chiffre 4 : configure la station en tant qu'esclave dans un troisième sous-groupe, par exemple C ;
- le chiffre 5 : configure la station en tant que maître du sous-groupe A ;
- le chiffre 6 : configure la station en tant que maître du sous-groupe B ;
- le chiffre 7 : configure la station en tant que maître du sous-groupe C ;
- le chiffre 8 : configure la station en tant que maître du groupe A + B + C.

Il s'agit, bien entendu, là, d'un exemple de réalisation sachant, en outre, que l'attribution des chiffres à telle ou telle configuration ou à tel ou tel rattachement à un groupe ou à un sous-groupe peut être modifié, tout comme le nombre de sous-groupes. De même, la subdivision en groupes et en sous-groupes peut être indéfinie en théorie.

Lorsqu'une station est configurée en maître la distinction entre un ordre local et un ordre général, conduisant, selon le cas, à commander uniquement le volet roulant correspondant à ladite station ou un groupe de volets roulants peut se faire par la durée des impulsions imprimées sur les interrupteurs de montée 11 et de descente 12.

Il convient d'observer qu'une station 4A, 4B ... 4F correspondant à un tel dispositif de commande conforme à l'invention, peut également intervenir en tant que détecteur d'une éventuelle tentative d'effraction. Notamment, l'unité de traitement logique 6 peut être raccordée à un système d'alarme quelconque, tandis que des capteurs 15, du type capteurs de lumière, de présence ou autre, informe cette unité de traitement logique 6 s'il y a intervention directe sur le tablier du volet roulant.

Dans tous les cas, l'on comprend au vu de la description qui précède, que la présente invention résout bon nombre de problèmes en matière de commande de volets roulants motorisés au niveau d'une habitation. Tout particulièrement, le dispositif de commande, conforme à cette invention, permet de choisir, librement, l'emplacement de la commande centrale par l'intermédiaire de laquelle il est impossible de commander un groupe ou un sous-groupe de volets roulants. Cet emplacement peut ensuite être modifié au gré de l'usager. En outre, celui-ci disposant de moyens de signalisation visuels efficaces constitués par le tablier du volet roulant lui-même, il peut percevoir une information claire et nette, que ce soit au sujet de la bonne exécution d'un ordre saisi au niveau des moyens de commande 3 ou en ce qui concerne la bonne compréhension d'une programmation.

Dans ce contexte, la présente invention représente un net progrès par rapport à l'état de la technique antérieur.

## Revendications

1. Dispositif pour la commande d'ouverture et de fermeture de moyens d'occultation motorisés, plus particulièrement de volets roulants (2), composés de stations (4A, 4B ... 4F) définissant un ou plusieurs groupes, chaque station (4A, 4B ... 4F), correspondant à un moyen d'occultation (2), étant équipée d'un boîtier électronique (5) comportant une unité de traitement logique (6) programmable à laquelle est associée une mémoire (7) ainsi que des moyens de commande (3) pour le fonctionnement dudit moyen d'occultation (2) correspondant à ladite station (4A, 4B ... 4F), caractérisé par le fait que :
- l'unité de traitement logique (6) programmable est connectée, d'une part, au moteur (8) dudit moyen d'occultation (2) par une interface de puissance (9) et, d'autre part, aux autres stations (4A, 4B ... 4F) du groupe par une interface domotique (10);
- les moyens de commande (3) constituent des moyens de programmation de l'unité de traitement logique programmable (6) par l'intermédiaire de laquelle une station (4A, 4B ... 4F) peut être configurée en station maître ou en station esclave autorisant ou non la commande, par l'intermédiaire desdits moyens de commande (3) de ladite station (4A, 4B ... 4F), d'une ou plusieurs autres stations (4A, 4B ... 4F) d'un groupe ou d'un sous-groupe ;
- chaque station (4A, 4B ... 4F) comporte des moyens de détection (13) à même d'informer l'unité de traitement logique (6) sur la position de l'élément d'occultation, tel que le tablier d'un volet roulant (2), tout particulièrement ces moyens de détection (13) étant aptes à informer l'unité de traitement logique (6) si un moyen d'occultation (2) est ou non fermé ;
- chaque station (4A, 4B ... 4F) comporte des moyens de signalisation visuels et/ou sonores (14) à même d'émettre une information quant à la bonne exécution ou non d'un ordre de commande d'ouverture et/ou de fermeture d'un groupe ou d'un sous-groupe de moyens d'occultation et/ou sur la bonne compréhension et assimilation d'un ordre de programmation saisi par les moyens de commande (3).

2. Dispositif selon la revendication 1, caractérisé par le fait que les moyens de signalisation, visuels et/ou sonores (14) sont constitués par un élément d'occultation, tel qu'un volet roulant, dont la position ou le mouvement constitue les moyens d'information de l'usager.

3. Dispositif selon la revendication 2, caractérisé par le fait que les moyens de signalisation visuels et/ou sonores (14) sont constitués par l'élément d'occultation correspondant à la station sur laquelle est intervenu l'usager à l'aide des moyens de commande (3) correspondants pour saisir, soit un ordre de commande d'ouverture ou de fermeture, soit un ordre de programmation de l'unité de traitement logique (6).

4. Dispositif selon la revendication 1, caractérisé par le fait que les moyens de commande (3) sont constitués par des interrupteurs monostables (11, 12), préférentiellement, au nombre de deux aptes à transmettre une information du type séquentiel à l'unité de traitement logique (6) laquelle est à même d'interpréter les séquences en fonction des données en mémoire (7).

5. Dispositif selon l'une quelconque des revendications 1 à 4, caractérisé par le fait que la transmission d'informations entre les moyens de commande (3) et l'unité de traitement logique (6) et/ou entre les unités de traitement logique (6) de plusieurs stations (4A, 4B ... 4F) d'un groupe ou d'un sous-groupe, s'effectue par bus et/ou par courant porteur et/ou par ondes ultrasons et/ou infrarouges et/ou radio.

6. Dispositif selon la revendication 5, caractérisé par le fait que, en cas de réception et de transmission d'informations sous forme codée et cryptée, une station (4A, 4B ... 4F) est munie d'une unité de cryptage-codage ainsi que d'une unité de décryptage-décodage, les moyens de commande (3) étant équipés d'une unité de cryptage codage.

7. Dispositif selon la revendication 4, caractérisé par le fait que l'information séquentielle transmise par les moyens de commande (3 ) à une unité de traitement logique (6) sont interprétés par rapport :
- à l'originalité de l'impulsion (interrupteur montée (11) ou interrupteur descente (12)) ;
- l'ordre des impulsions sur les interrupteurs (11, 12);
- le nombre des impulsions sur les interrupteurs (11) et/ou (12);
- la durée des impulsions.

8. Dispositif selon l'une quelconque des revendications précédentes, caractérisé par le fait qu'une station (4A, 4B ... 4F) constitue des moyens détecteurs d'une éventuelle tentative d'effraction, ladite unité de traitement logique (6) étant raccordée à un système d'alarme, tandis que des capteurs (15) du type capteurs de lumière, de présence ou autres, informant cette unité de traitement logique (6) en cas d'intervention directe sur l'élément d'occultation, notamment le tablier d'un volet roulant.

## Claims

1. Controller to open and close motorised occultation means, in particular roller blinds (2), comprised of stations (4A, 4B ... 4F) defining one or several groups, each station (4A, 4B ... 4F), corresponding to an occultation means (2), being provided with an electronic casing (5) including a programmable logic processing unit (6) which a memory (7) is associated with, as well as control means (3) for the operation of said occultation means (2) corresponding to said station (4A, 4B ... 4F), characterised in that:
- the programmable logic processing unit (6) is connected, on the one hand, to the motor (8) of said occultation means (2), through a power interface (9), and, on the other hand, to the other stations (4A, 4B ... 4F) of the group, through a home automation interface (10);
- the control means (3) form programming means for the programmable logic processing unit (6), through which a station (4A, 4B ... 4F) can be configured as master station or slave station authorising or not to control, through said control means (3), said station (4A, 4B ... 4F), one or several other stations (4A, 4B ... 4F) of a group or sub-group;
- each station (4A, 4B ... 4F) includes detector means (13) capable of informing the logic processing unit (6) of the position of the occultation element, such as the apron of a roller blind (2), these detector means (13) being, in particular, capable of informing the logic processing unit (6) of whether or not an occultation means (2) is closed ;
- each station (4A, 4B ... 4F) includes visual and/or sound signalling means (14) capable of transmitting an information as to the correct carrying out or not of an order to control the opening and/or closing of a group or a sub-group of occultation means and/or the correct understanding and assimilation of a programming order detected by the control means.

2. Device according to claim 1, characterised in that the visual and/or sound signalling means (14) are formed by an occultation element, such as a roller blind, the position or the displacement of which forms the means for informing the user.

3. Device according to claim 2, characterised in that the visual and/or sound signalling means (14) are formed by the occultation element corresponding to the station on which the user has acted through corresponding control means (3) in order to detect either an order to control the opening or the closing or a programming order for the logic processing unit (6).

4. Device according to claim 1, characterised in that the control means (3) are comprised of monostable switches (11, 12), preferably two in number, capable of transmitting an information of a sequential type to the logic processing unit (6), which is capable of interpreting the sequences according to the data in the memory (7).

5. Device according to any of claims 1 to 4, characterised in that the transmission of information between the control means (3) and the logic processing unit (6) and/or between the logic processing units (6) of several stations (4A, 4B ... 4F) of a group or a sub-group occurs through a bus and/or through a carrier current and/or through ultrasonic and/or infrared and/or radio-frequency waves.

6. Device according to claim 5, characterised in that, in the event of receiving and transmitting information in a coded and encrypted form, a station (4A, 4B ... 4F) is provided with an encrypting-coding unit as well as a decrypting-decoding unit, the control means (3) being provided with an encrypting-coding unit.

7. Device according to claim 4, characterised in that the sequential information transmitted by the control means (3) to a logic processing unit (6) is interpreted as to:
- the origin of the impulse (rolling-up switch (11) or unrolling switch (12)) ;
- the order of the impulses on the switches (11, 12) ;
- the number of impulses on the switches (11) and/or (12) ;
- the duration of the impulses.

8. Device according to any of the preceding claims, characterised in that a station (4A, 4B ... 4F) forms means for detecting an eventual attempt of burglary, said logic processing unit (6) being connected to an alarm system, while detectors (15), such as light, presence or other detectors, inform this logic processing unit (6) in the event of a direct action on the occultation element, namely the apron of a roller blind.

## Patentansprüche

1. Steuergerät zum Öffnen und Schließen motorisierter Verdunklungsmittel, insbesondere Rolläden (2), die aus Stationen (4A, 4B ... 4F) bestehen, die eine oder mehrere Gruppen definieren, wobei jede, einem Verdunklungsmittel (2) entsprechende Station (4A, 4B ... 4F) mit einem elektronischen Gehäuse (5) versehen ist, das eine programmierbare logische Verarbeitungseinheit (6), der ein Speicher (7) zugeordnet ist, sowie Steuermittel (3) für den Betrieb des genannten, der genannten Station (4A, 4B ... 4F) entsprechenden Verdunklungsmittels (2) umfaßt, dadurch gekennzeichnet, daß:
- die programmierbare logische Verarbeitungseinheit (6) einerseits über eine Leistungsschnittstelle (9) mit dem Motor (8) des genannten Verdunklungsmittels (2) und andererseits über eine Haushaltstechnik-Schnittstelle (10) mit den weiteren Stationen (4A, 4B ... 4F) der Gruppe verbunden ist ;
- die Steuermittel (3) Programmiermittel für die programmierbare logische Verarbeitungseinheit (6) bilden, über die eine Station (4A, 4B ... 4F) als Haupt- oder Hilfsstation konfiguriert werden kann, welche die Steuerung, über die genannten Steuermittel (3) der genannten Station (4A, 4B ... 4F), einer oder mehreren weiteren Stationen (4A, 4B ... 4F) einer Gruppe oder einer Untergruppe erlaubt oder nicht ;
- jede Station (4A, 4B ... 4F) Erfassungsmittel (13) umfaßt, geeignet, die logische Verarbeitungseinheit (6) über die Lage des Verdunklungselements, wie der Decke eines Rolladens (2), zu informieren, wobei diese Erfassungsmittel (13) insbesondere in der Lage sind, die logische Verarbeitungseinheit (6) darüber zu informieren, ob ein Verdunklungsmittel (2) geschlossen ist oder nicht ;
- jede Station (4A, 4B ... 4F) visuelle und/oder hörbare Signalisierungsmittel (14) umfaßt, geeignet, eine Information über die richtige Erledigung oder nicht eines Bedienungsbefehls zum Öffnen und/oder Schließen einer Gruppe oder einer Untergruppe von Verdunklungsmitteln und/oder über das richtige Verstehen und Aufnehmen eines von den Steuermitteln (3) erfaßten Programmierungsbefehls zu senden.

2. Gerät nach Anspruch 1, dadurch gekennzeichnet, daß die visuellen und/oder hörbaren Signalisierungsmittel (14) durch ein Verdunklungselement, wie einen Rolladen, gebildet sind, dessen Lage oder Bewegung die Mittel, um den Gebraucher zu informieren, bilden.

3. Gerät nach Anspruch 2, dadurch gekennzeichnet, daß die visuellen und/oder hörbaren Signalisierungsmittel (14) durch das Verdunklungselement gebildet sind, das derjenigen Station entspricht, an der der Gebraucher durch entsprechende Steuermittel (3) eingegriffen hat, um entweder einen Bedienungsbefehl zum Öffnen und/oder Schließen oder einen Befehl zum Programmieren der logischen Verarbeitungseinheit (6) zu erfassen.

4. Gerät nach Anspruch 1, dadurch gekennzeichnet, daß die Steuermittel (3) aus monostabilen Schaltern (11, 12), vorzugsweise zwei an der Zahl, bestehen, geeignet, eine Information sequenzieller Art zu übersenden an die logische Verarbeitungseinheit (6), die in der Lage ist, die Sequenzen in Abhängigkeit der im Speicher (7) enthaltenen Daten zu interpretieren.

5. Gerät nach irgendeinem der Ansprüche 1 bis 4, dadurch gekennzeichnet, daß die Übersendung von Informationen zwischen den Steuermitteln (3) und der logischen Verarbeitungseinheit (6) und/oder zwischen den logischen Verarbeitungseinheiten (6) mehrerer Stationen (4A, 4B ... 4F) einer Gruppe oder einer Untergruppe über einen Bus und/oder einen Trägerstrom und/oder durch Ultraschall- und/oder infrarote und/oder Radiofrequenzwellen erfolgt.

6. Gerät nach Anspruch 5, dadurch gekennzeichnet, daß eine Station (4A, 4B ... 4F) für den Fall des Empfangs und der Sendung von Informationen in kodierter und verschlüsselter Form mit einer Verschlüsselungs-Kodiereinheit sowie einer Entschlüsselungs-Dekodiereinheit versehen ist, wobei die Steuermittel (3) mit einer Verschlüsselungs-Kodiereinheit versehen sind.

7. Gerät nach Anspruch 4, dadurch gekennzeichnet, daß die einer logischen Verarbeitungseinheit (6) durch die Steuermittel (3) übersandte, sequenzielle Information interpretiert wird hinsichtlich:
- des Ursprungs des Impulses (Aufwicklungsschalter (11) oder Abwicklungsschalter (12)) ;
- der Folge der Impulse an den Schaltern (11, 12) ;
- der Anzahl der Impulse an den Schaltern (11) und/oder (12) ;
- der Dauer der Impulse.

8. Gerät nach irgendeinem der vorgehenden Ansprüche, dadurch gekennzeichnet, daß eine Station (4A, 4B ... 4F) Mittel zum Erfassen eines eventuellen Einbruchsversuchs bilden, wobei die genannte logische Verarbeitungseinheit (6) an einem Alarmsystem angeschlossen ist, während Sensoren (15), der Art Leucht-, Anwenheitssensoren oder dergleichen, diese logische Verarbeitungseinheit (6) informieren im Falle eines direkten Eingriffs auf das Verdunklungselement, nämlich die Decke eines Rolladens.
